# EUROPÄISCHE PATENTSCHRIFT

(11) **EP 1 619 061 B1**
(45) Veröffentlichungstag und Bekanntmachung des Hinweises auf die Patenterteilung: **03.10.2007**
(21) Anmeldenummer: 05013743.9
(22) Anmeldetag: 25.06.2005
(51) Int. Cl.: B60J 10/12

(54) **Kraftfahrzeug mit einem verfahrbaren Dachelement**
Motor vehicle provided with a moveable roof element
Véhicule automobile équipé d'un toit amovible

(30) Priorität: 20.07.2004 DE 102004035169
(43) Veröffentlichungstag der Anmeldung: 25.01.2006
(73) Patentinhaber: Wilhelm Karmann GmbH, 49084 Osnabrück (DE)
(72) Erfinder: Kreiling, Nils, 49078 Osnabrück (DE)

(56) Entgegenhaltungen:
- US-A- 4 883 311
- US-A- 5 961 177

## Beschreibung

Die Erfindung betrifft ein Kraftfahrzeug mit wenigstens einem gegenüber einem Dachteil zwischen einer ersten einem geschlossenen Zustand des Fahrzeugdaches äquivalenten Position und einer zweiten einem geöffneten Zustand des Fahrzeugdaches äquivalenten Position verfahrbar ausgeführten Dachelement gemäß der im Oberbegriff des Patentanspruches 1 näher definierten Art.

Aus der DE 199 43 716 C2 ist ein Personenkraftwagen mit einem variablen Dach-/Heckbereich, insbesondere ein Kombi oder ein Geländewagen mit einem Heckladeraum, bekannt, bei dem wenigstens ein Deckel eines hinteren Dachabschnitts und ein Heckteil zu öffnen sind. Dabei sind ein oder auch mehrere Deckel des hinteren Dachabschnitts um eine im Bereich des Daches verlaufende Längs- oder Querachse aus der Dachfläche herabschwenkbar.

Zum Versteifen der Karosserie oder zum Anbringen einer Lastenträgereinrichtung kann ein Dachquerholm am Hinterende des Daches lösbar angebracht sein, an dem einer der Deckel in geschlossenem Zustand dicht anliegt. Der Dachquerholm weist dann die Dichtung auf, an der der Deckel anliegt. Um eine durchgehende Dachöffnung herzustellen, ist es zweckmäßig, wenn der Dachquerholm am Dach einerseits mit einer Gelenklagerung und andererseits mit einer lösbaren Befestigung angebracht ist, so dass er in eine in etwa vertikale Position herabklappbar ist. Alternativ hierzu ist es auch vorgesehen, dass der Dachquerholm durch Lösen an seinen beiden Enden auch gänzlich vom Fahrzeug entfernbar ist.

Nachteilig dabei ist jedoch, dass der Deckel beim Öffnen des Fahrzeugdaches in Bezug auf den Dachholm zunächst in Fahrzeuglängsrichtung zu bewegen ist, um den Deckel an dem Dachholm vorbeiführen und im Inneren des Fahrzeuges ablegen zu können. Dieser Bewegungsablauf des Deckels erfordert jedoch einen konstruktiv aufwendigen Verschwenkmechanismus für den Deckel, der durch einen großen Bauraumbedarf und hohe Herstellkosten gekennzeichnet ist.

Des Weiteren ist aus der EP 1 275 545 A2 ein Fahrzeugdach mit mindestens zwei festen Dachteilen bekannt, die während einer Öffnungsbewegung aufstellbar und in Vorwärtsfahrtrichtung nach hinten wegklappbar sind. Zwischen den Dachteilen ist wenigstens an einer Stirnseite des ersten Dachteiles ein sich in Fahrzeugquerrichtung erstreckendes Dichtprofil vorgesehen.

Darüber hinaus weist das erste Dachteil einen zugeordneten Auffangkanal zum Aufnehmen von während der Bewegung des ersten Dachteiles von diesem abfließendem Wasser auf. Das Dichtprofil ist im Inneren mit einem mit dem Auffangkanal in Verbindung stehenden Kanal ausgeführt, der wenigstens eine Öffnung hat, über welche in dem Auffangkanal befindliches Wasser während der Bewegung des ersten Dachteiles in den Kanal geführt wird.

Dieses bekannte Fahrzeugdach weist jedoch ebenfalls den Nachteil auf, dass das zweite Dachteil zu Beginn eines Öffnungsvorganges des Fahrzeugdaches oder am Ende eines Schließvorganges des Fahrzeugdaches an dem Auffangkanal und dem Dichtprofil vorbeigeführt werden muss, wozu jedoch eine aufwendige Verstellkinematik zur Verfügung gestellt werden muss.

Der vorliegenden Erfindung liegt daher die Aufgabe zugrunde, ein Kraftfahrzeug zur Verfügung zu stellen, bei dem ein Fahrzeugdach auf einfache Art und Weise und kostengünstig zwischen einer ersten einem geschlossenem Zustand des Fahrzeugdaches äquivalenten Position und einer zweiten einem geöffneten Zustand des Fahrzeugdaches äquivalenten Position verfahrbar ist.

Erfindungsgemäß wird diese Aufgabe mit einem Kraftfahrzeug gemäß den Merkmalen des Patentanspruches 1 gelöst.

Bei dem erfindungsgemäßen Kraftfahrzeug mit wenigstens einem gegenüber einem Dachteil zwischen einer ersten einem geschlossenen Zustand des Fahrzeugdaches äquivalenten Position und einer zweiten einem geöffneten Zustand des Fahrzeugdaches äquivalenten Position verfahrbar ausgeführten Dachelement und mit einer dem Dachteil und dem Dachelement zugeordneten Dichteinrichtung, die mit dem Dachteil verbunden ist sowie in geschlossenem Zustand des Fahrzeugdaches auf der dem Fahrzeuginnenraum zugewandten Seite des Dachelementes an diesem dichtend anliegt und in Bezug auf das Dachteil wenigstens teilweise in eine von dem Dachteil begrenzte und von dem Dachelement wenigstens bereichsweise verschließbare Öffnung vorkragt, ist das Fahrzeugdach auf einfache Art und Weise kostengünstig öffen- und schließbar.

Dies wird dadurch erreicht, dass zumindest der in die Öffnung vorkragende Teil der Dichteinrichtung gegenüber dem Dachteil bewegbar ist, so dass dieser wenigstens teilweise aus dem Bereich der Öffnung führbar ist.

Damit ist gewährleistet, dass das Dachelement beim Öffnen des Fahrzeugdaches in Bezug auf die die von dem Dachelement verschließbare Öffnung verkleinernde Dichteinrichtung nicht oder nur unwesentlich verschoben werden muss, bevor eine Öffnungsbewegung des Dachelementes durch die Öffnung des Fahrzeugdaches hindurch ausgeführt werden kann. Mit einem erfindungsgemäß ausgebildeten Fahrzeugdach besteht nunmehr die Möglichkeit, einen zum Führen des Dachelementes vorgesehenen Verstellmechanismus mit einer im Vergleich zum Stand der Technik einfacheren Kinematik auszugestalten, was zu einer Reduzierung der Herstellkosten eines solchen Verstellmechanismus und auch des Fahrzeuges führt.

Darüber hinaus ist von Vorteil, dass das zum wenigstens teilweisen Verschließen der Öffnung vorgesehene Dachelement aufgrund der beweglich ausgeführten Dichteinrichtung derart an die Abmessungen der Öffnung anpassbar ist, dass zwischen dem Dachelement und dem Dachteil nur geringe Spaltmaße vorliegen. Das Dachelement ist trotz der an die Öffnung angepassten Abmessungen zum Öffnen und/oder Schließen des Fahrzeugdaches durch die Öffnung des Fahrzeugdaches führbar, da die Bewegung des Dachelementes durch die Öffnung von der beweglich ausgebildeten und wenigstens teilweise aus dem Bereich der Öffnung führbaren Dichteinrichtung nicht bzw. nur unwesentlich behindert wird.

Weitere Vorteile und vorteilhafte Weiterbildungen des Gegenstandes nach der Erfindung ergeben sich aus der Beschreibung, der Zeichnung und den Patentansprüchen.

In der Zeichnung sind zwei Ausführungsbeispiele des Gegenstandes nach der Erfindung schematisch vereinfacht dargestellt, welche in der nachfolgenden Beschreibung näher erläutert werden, wobei in der Beschreibung der verschiedenen Ausführungsbeispiele der Übersichtlichkeit halber für bau- und funktionsgleiche Bauteile dieselben Bezugszeichen verwendet werden.

Es zeigen:
- Fig. 1: eine stark schematisierte Teilansicht auf ein Fahrzeugdach eines Kraftfahrzeuges;
- Fig. 2: einen schematisch dargestellten Teilquerschnitt durch das Fahrzeugdach des Kraftfahrzeuges gemäß Fig. 1 entlang einer Linie II-II;
- Fig. 3: die Darstellung gemäß Fig. 2, wobei eine Dichteinrichtung in einer gegenüber der Darstellung gemäß Fig. 1 aus dem Bereich der Öffnung des Fahrzeugdaches verschwenkten Position dargestellt ist;
- Fig. 4: eine zweite alternative Ausführungsform des Gegenstandes nach der Erfindung in einer Darstellung gemäß Fig. 2; und
- Fig. 5: die in Fig. 4 dargestellte Ausführungsform mit einer gegenüber einem Dachelement aus dem Bereich der Öffnung des Fahrzeugdaches verschwenkten Dichteinrichtung.

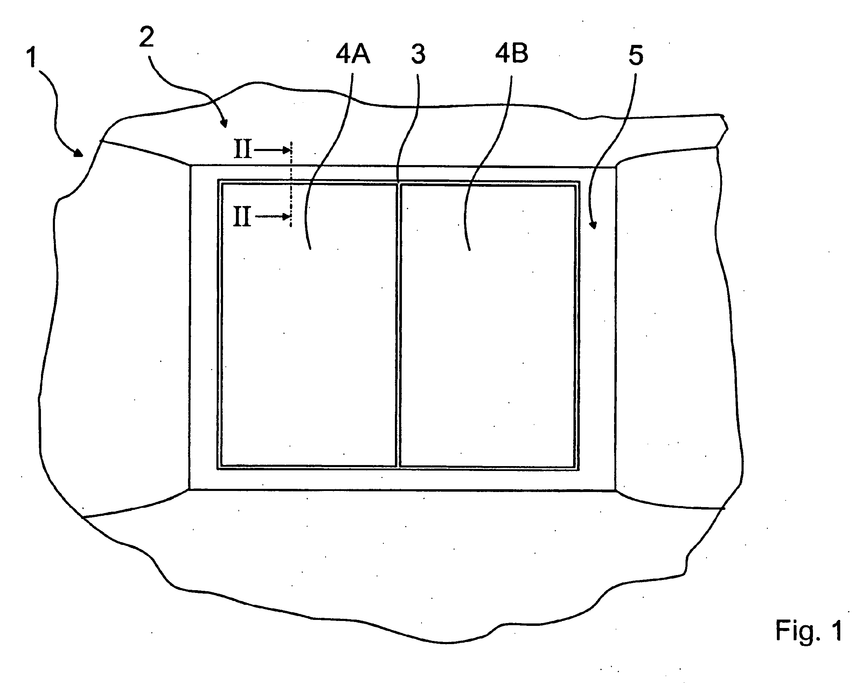

Fig. 1 zeigt eine stark schematisierte Teildarstellung eines Kraftfahrzeuges 1 mit einem öffenbaren Fahrzeugdach 2, wobei eine Öffnung 3 des Fahrzeugdaches 2 vorliegend von zwei Dachelementen 4A und 4B verschlossen ist. Die Öffnung 3 ist von einem als ein rahmenartiger Dachrohbau ausgeführten Dachteil 5, das die Öffnung 3 vorliegend vollständig umschließt, begrenzt und erstreckt sich sowohl in Fahrzeuglängsrichtung als auch in Fahrzeugquerrichtung nahezu über die gesamte Dachoberfläche, um in geöffnetem Zustand des Fahrzeugdaches 2 einen möglichst großen Freiraum oberhalb eines Innenraums 7 des Kraftfahrzeuges 1 zur Verfügung stellen können.

Die beiden Dachteile 4A und 4B sind in Fahrzeuglängsrichtung sowie in vertikaler Richtung zu der Zeichenebene in Bezug auf das Dachteil 5 mit Hilfe einer nicht näher dargestellten Verstellkinematik manuell oder über einen Antriebsmechanismus automatisch bewegbar, so dass das Fahrzeugdach 2 von einem in Fig. 1 dargestellten geschlossenen Zustand in einen die Öffnung 3 freigebenden bzw. geöffneten Zustand überführbar ist.

Beim Öffnen des Fahrzeugdaches 2 werden die beiden Dachelemente 4A und 4B mittels der Verstellkinematik aus der in Fig. 1 dargestellten und dem geschlossenem Zustand des Fahrzeugdaches 2 äquivalenten ersten Position in eine zweite dem geöffneten Zustand äquivalente Position verfahren, wobei die Dachelemente 4A und 4B durch die Öffnung 3 des Fahrzeugs hindurch geführt werden und vorzugsweise in der zweiten Position in einem nicht näher dargestellten Stauraum innerhalb der Fahrzeugkarosserie abgelegt werden.

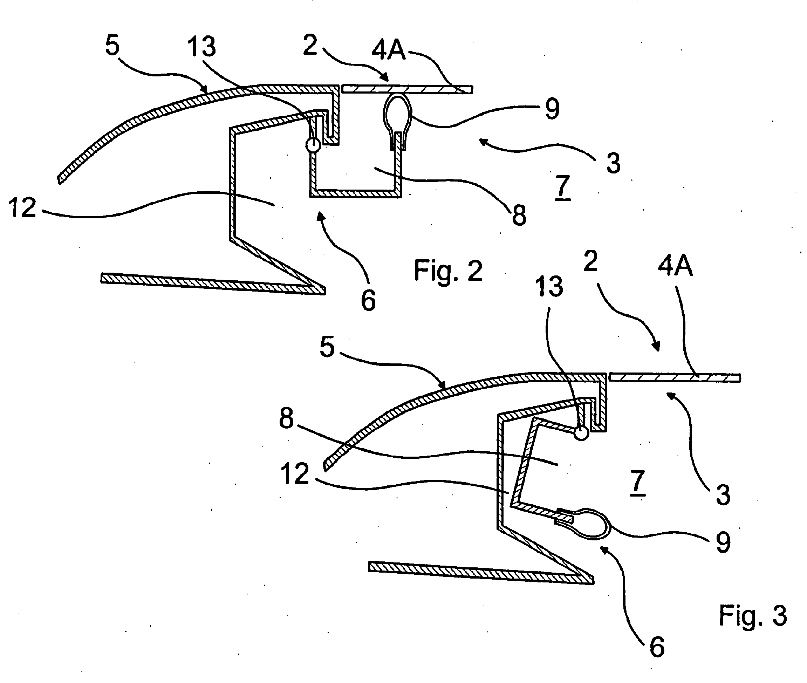

Fig. 2 zeigt eine stark schematisierte Teilquerschnittansicht des Fahrzeugdaches 2 entlang einer in Fig. 1 dargestellten Linie II-II. Des Weiteren ist eine dem Dachelement 4A und dem Dachteil 5 zugeordnete Dichteinrichtung 6 gezeigt, die vorliegend an einer dem Fahrzeuginnenraum 7 zugeordneten Seite des Dachteiles 5 auf später näher beschriebene Art und Weise verschwenkbar befestigt ist.

Die Dichteinrichtung 6 besteht vorliegend aus einem Wasserkanal 8 und einem Dichtelement 9. Der Wasserkanal 8 ist vorliegend im Querschnitt U-förmig ausgeführt und ist mit seinem einen freien Schenkelende mit dem Dachteil 5 verbunden. An seinem zweiten freien Schenkelende ist das im Querschnitt wenigstens annähernd ballonförmig ausgebildete Dichtelement 9 aufgesteckt, welches mit seinem dem Wasserkanal 8 abgewandten Ende dichtend an der dem Fahrzeuginnenraum 7 zugewandten Seite des Dachelementes 4A anliegt.

Die Dichteinrichtung 6 ist in der in Fig. 3 dargestellten Art und Weise gegenüber dem Dachelement 4A und auch dem Dachteil 5 derart beweglich ausgeführt, dass der in der in Fig. 1 gezeigten Wirkposition der Dichteinrichtung 6 in die Öffnung 3 vorkragende Teil der Dichteinrichtung 6 bedarfsweise aus dem Bereich der Öffnung 3 des Fahrzeugdaches 2 in die in Fig. 3 dargestellte Position verschwenkbar ist. Damit ist gewährleistet, dass der komplette Querschnitt der Öffnung 3 während eines Öffnungsvorgangs bzw. während eines Schließvorgangs des Fahrzeugdaches 2 zum Führen der beiden Dachelemente 4A und 4B durch die Öffnung 3 zur Verfügung steht.

Um eventuell auf dem Dachelement 4A befindliches Wasser, welches beim Öffnen des Fahrzeugdaches 2 in den Fahrzeuginnenraum 7 ablaufen würde, sicher im Wasserkanal 8 auffangen zu können, besteht die Möglichkeit, die Schwenkbewegung der Dichteinrichtung 6 von ihrer dem geschlossenen Zustand des Fahrzeugdaches 2 äquivalenten und in Fig. 2 dargestellten ersten Position in ihre dem geöffneten Zustand des Fahrzeugdaches 2 äquivalente zweite und in Figur 3 gezeigten Position an die Öffnungsbewegung des Dachelementes 4A derart zu koppeln, dass der Wasserkanal 8 in Zwischenschwenkpositionen solange wie möglich als Auffangbehältnis unterhalb des Stoßbereiches zwischen dem Dachteil 5 und dem Dachelement 4A zur Verfügung gestellt wird, um möglichst viel der sich auf dem Dachelement 4A befindlichen Wassermenge in dem Wasserkanal 8 der Dichteinrichtung 6 aufzufangen.

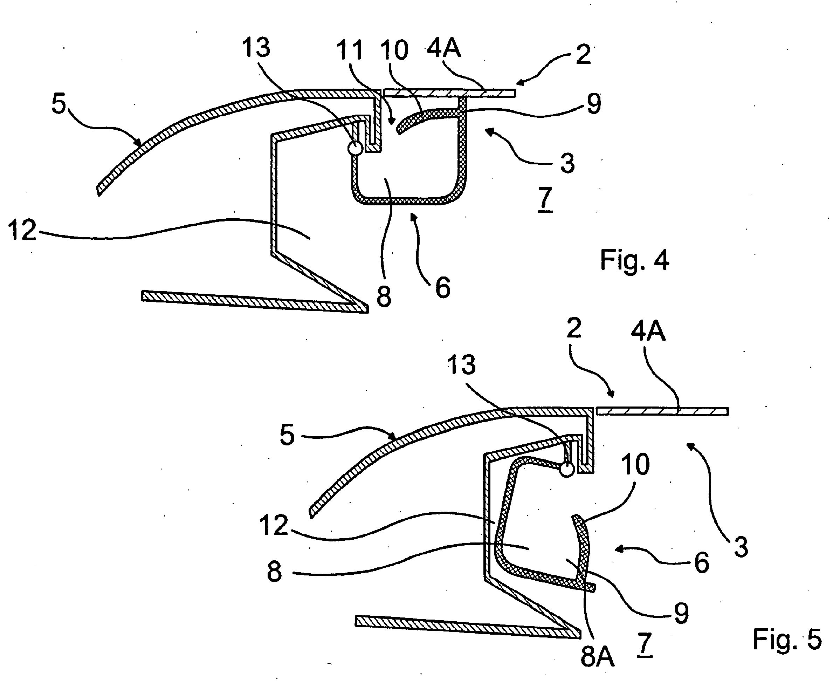

In Fig. 4 und Fig. 5 ist ein zu dem in Fig. 2 und Fig. 3 dargestellten ersten Ausführungsbeispiel alternatives zweites Ausführungsbeispiel des Gegenstandes nach der Erfindung ebenfalls in einer Teilquerschnittansicht entlang der Linie II-II aus Figur 1 gezeigt.

Bei dem in Fig. 4 und Fig. 5 dargestellten zweiten Ausführungsbeispiel ist der Wasserkanal 8 einstückig mit dem Dichtelement 9 ausgeführt, wobei die Dichteinrichtung 6 gemäß Fig. 4 und Fig. 5 dieselben Funktionalitäten wie die Dichteinrichtung 6 gemäß Fig. 2 und Fig. 3 aufweist. Zusätzlich ist das Dichtelement 9 bei dem in Fig. 4 und Fig. 5 dargestellten Ausführungsbeispiel mit einem sich von dem an dem Dachelement 4A anliegenden Bereich in Richtung des Dachteiles 5 erstreckenden Mantelbereich 10 ausgeführt, der eine teilweise Abdeckung des Wasserkanals 8 darstellt.

Die Ausgestaltung des Dichtelementes 9 mit dem Mantelbereich 10 gewährleistet, dass das in dem Wasserkanal 8 während einer Öffnungsbewegung des Dachelementes 4A aufgefangene Wasser selbst bei großen Schwenkwinkeln der Dichteinrichtung 6 nicht in den Innenraum 7 des Kraftfahrzeuges 1 abfließt.

Das beim Öffnen des Fahrzeugdaches 2 von dem Dachelement 4A abfließende Wasser strömt über einen in Wirkposition der Dichteinrichtung 6 zwischen dem Mantelbereich 10 und dem Dachelement 5 ausgebildeten Schlitz 11 in den Wasserkanal 8 ein. Mit zunehmendem Schwenkwinkel der Dichteinrichtung 6 bildet der Mantelbereich 10 des Dichtelementes 9 mit Bereichen des Wasserkanals 8 und des Dichtelementes 9 einen weiteren Kanalbereich 8A, indem das in dem Wasserkanal 8 aufgefangene Wasser zurückgehalten wird. Das in dem Wasserkanal 8 bzw. in dem weiteren Kanalbereich 8A gesammelte Wasser wird über nicht näher dargestellte Ausströmöffnungen an die Umgebung des Kraftfahrzeuges abgeführt ohne in den Fahrzeuginnenraum 7 zu gelangen.

Mit der vorgeschlagenen Ausgestaltung des Dichtelementes 9 wird auf einfache Art und Weise einerseits ein Eintreten des Wassers in den Wasserkanal 8 ermöglicht und andererseits ein Austreten des aufgefangenen Wassers aufgrund des wenigstens teilweise spiralförmigen Querschnitts des Dichtelementes 9 verhindert.

Bei beiden in der Zeichnung dargestellten Ausführungsbeispielen wird die Dichteinrichtung 6 in einen von dem Dachteil 5 begrenzten Hohlraum 12 um eine Schwenkachse 13 aus ihrer in Fig. 2 bzw. Fig. 4 dargestellten dichtenden Wirkposition in ihre zweite die Öffnung 3 des Fahrzeugdaches 2 freigebende Position in den Hohlraum 12 verschwenkt, so dass das Dachelement 4A im Wesentlichen ungehindert durch die von dem Dachteil 5 begrenzte Öffnung 3 hindurch geführt werden kann.

Die Schwenkachse 13 ist vorliegend als ein flexibler Bereich der Dichteinrichtung 6 ausgeführt, der bei dem in Fig. 2 und Fig. 3 dargestellten ersten Ausführungsbeispiel als ein Gelenk bzw. ein Scharnier ausgeführt ist. Bei dem zweiten in Fig. 4 und Fig. 5 dargestellten Ausführungsbeispiel ist der flexible Bereich der Dichteinrichtung 6 als ein elastischer, vorzugsweise mit verminderter Wandstärke ausgeführter Bereich ausgebildet, so dass die Dichteinrichtung 6 auf einfache Art und Weise verformbar und somit in der in der Zeichnung dargestellten Art und Weise um die derartig ausgebildete Schwenkachse 13 verschwenkbar ausgeführt ist.

Zusätzlich besteht in nicht näher dargestellter Art und Weise die Möglichkeit, die Dichteinrichtung 6 in ihrer dichtenden Wirkposition und/oder in ihrer die Öffnung 3 freigebenden zweiten Position über nicht näher dargestellte Mittel zu arretieren, so dass eine unerwünschte bzw. undefinierte Relativbewegung zwischen dem Dachteil 5 und der Dichteinrichtung 6 auf einfache Art und Weise vermieden ist. Dabei kann es zusätzlich vorgesehen sein, dass die Ansteuerung der Arretierung der Dichteinrichtung derart mit der Ansteuerung des Dachelementes 4A gekoppelt ist, dass die Arretierung der Dichteinrichtung 6 während eines Öffnungsvorganges des Fahrzeugdaches 2 und/oder während eines Schließvorganges des Fahrzeugdaches 2 aktiviert bzw. deaktiviert wird.

Zusätzlich besteht die Möglichkeit, dass die Dichteinrichtung 6 während eines Öffnungsvorganges des Fahrzeugdaches 2 von dem Dachelement 4A aus seiner dichtenden Wirkposition in die die Öffnung 3 des Fahrzeugdaches 2 freigebende Position gedrückt wird und in seiner zweiten die Öffnung 3 freigebenden Position einrastet. Dadurch ist gewährleistet, dass das Dachelement 4A während eines sich an den Öffnungsvorgang anschließenden Schließvorgang des Fahrzeugdaches 2 ungehindert an der Dichteinrichtung 6 vorbeiführbar ist. Daran wiederum anschließend wird die Arretierung der Dichteinrichtung 6 gelöst, so dass sich die Dichteinrichtung 6 mit ihrem Dichtelement 9 dichtend an die dem Fahrzeuginnenraum 7 zugewandte Seite des Dachelementes 4A anliegen kann, wobei die Dichteinrichtung 6 in der dichtenden Wirkposition zur Verbesserung der Dichtwirkung wiederum arretierbar ausgeführt sein kann.

Selbstverständlich liegt es im Ermessen des Fachmannes, die vorbeschriebene beweglich ausgeführte Dichteinrichtung auch in anderen Stoßbereichen zwischen den Dachelementen 4A und 4B und dem Dachteil 5 anzuordnen. Des Weiteren kann die Dichteinrichtung auch im Stoßbereich zwischen dem Dachelement 4A und dem Dachelement 4B vorgesehen werden, wodurch in geschlossenem Zustand des Fahrzeugdaches 2 eine hohe Dichtwirkung zwischen den zueinander beweglich ausgeführten Bauteilen des Fahrzeugdaches 2 vorliegt und eine Verstellkinematik für die Dachelemente konstruktiv einfach ausführbar ist.

Die Anordnung der in der Zeichnung dargestellten Dichteinrichtung im Stoßbereich zwischen den beiden Dachelementen 4A und 4B ermöglicht deshalb den Einsatz einer konstruktiv einfach ausgeführten Verstellmechanik, da beim Öffnen bzw. beim Schließen des Fahrzeugdaches 2 wenigstens ein Teil der Dichteinrichtung in Bezug auf die beiden Dachelemente 4A und 4B in eine derartige Position bringbar ist, dass die Dachelemente 4A und 4B beim Öffnen bzw. Schließen des Fahrzeugdaches 2 ohne Aushebebewegungen an der Dichteinrichtung vorbeigeführt werden können.

Allen vorbeschriebenen Ausführungsbeispielen liegt jeweils der Vorteil zugrunde, dass die Abmessungen der Dachteile 4A und 4B jeweils wenigstens bereichsweise nur in geringem Umfang von den Abmessungen der Öffnung 3 des Fahrzeugdaches 2 abweichen. Dadurch liegen zwischen den Dachelementen 4A und 4B und dem Dachteil 5 bei der Anordnung der Dichteinrichtung 6 zwischen den Dachelementen 4A und 4B auch im Stoßbereich und zwischen den Dachelementen nur geringe Spaltmaße vor, die zu einer Verringerung des Dichtaufwandes in den Spaltbereichen und der Fahrgeräusche im Betrieb des Kraftfahrzeuges 1 führen.

### Bezugszeichen

- 1: Kraftfahrzeug
- 2: Fahrzeugdach
- 3: Öffnung
- 4A, 4B: Dachelement
- 5: Dachteil
- 6: Dichteinrichtung
- 7: Innenraum
- 8: Wasserkanal
- 8A: weiterer Kanalbereich
- 9: Dichtelement
- 10: Mantelbereich
- 11: Schlitz
- 12: Hohlraum des Dachteiles
- 13: Schwenkachse

## Patentansprüche

1. Kraftfahrzeug (1) mit wenigstens einem gegenüber einem Dachteil (5) zwischen einer ersten einem geschlossenen Zustand des Fahrzeugdaches (2) äquivalenten Position und einer zweiten einem geöffneten Zustand des Fahrzeugdaches (2) äquivalenten Position verfahrbar ausgeführten Dachelement (4A, 4B) und mit einer dem Dachteil (5) und dem Dachelement (4A, 4B) zugeordneten und mit dem Dachteil (5) verbundenen Dichteinrichtung (6), die in geschlossenem Zustand des Fahrzeugdaches (2) auf der dem Fahrzeuginnenraum (7) zugewandten Seite des Dachelementes (4A, 4B) an diesem dichtend anliegt und in Bezug auf das Dachteil (5) wenigstens teilweise in eine von dem Dachteil (5) begrenzte und von dem Dachelement (4A, 4B) wenigstens bereichsweise verschließbare Öffnung (3) vorkragt,
**dadurch gekennzeichnet,**
**dass** zumindest der in die Öffnung vorkragende Teil der Dichteinrichtung (6) gegenüber dem Dachteil (5) bewegbar ausgebildet ist, so dass dieser wenigstens teilweise aus dem Bereich der Öffnung (3) führbar ist.

2. Kraftfahrzeug nach Anspruch 1,
**dadurch gekennzeichnet,**
**dass** zumindest der in die Öffnung (3) vorkragende Teil der Dichteinrichtung (6) wenigstens bereichsweise derart flexibel ausgeführt ist, dass die Dichteinrichtung (6) während dem Öffnen oder dem Schließen des Fahrzeugdaches (2) wenigstens teilweise aus dem Bereich der Öffnung (3) führbar ist.

3. Kraftfahrzeug nach Anspruch 2,
**dadurch gekennzeichnet,**
**dass** der flexible Bereich (13) der Dichteinrichtung (6) gelenkartig ausgebildet ist und der in die Öffnung (3) vorkragende Teil der Dichteinrichtung (6) aus einer ersten dichtenden Position in eine die Öffnung (3) wenigstens teilweise freigebende zweite Position verschwenkbar ist.

4. Kraftfahrzeug nach einem der Ansprüche 1 bis 3,
**dadurch gekennzeichnet,**
**dass** der in die Öffnung (3) vorkragende Teil der Dichteinrichtung (6) bei einem Öffnen und/oder bei einem Schließen des Fahrzeugdaches (2) von dem dabei durch die Öffnung (3) geführten Dachelement (4A, 4B) aus dem Bereich der Öffnung (3) führbar ist.

5. Kraftfahrzeug nach einem der Ansprüche 1 bis 4,
**dadurch gekennzeichnet,**
**dass** eine Anordnung des in die Öffnung (3) vorkragenden Teils der Dichteinrichtung (6) in Abhängigkeit eines Zustandes eines Verstellmechanismus des Dachelementes (4A, 4B) steht.

6. Kraftfahrzeug nach einem der Ansprüche 3 bis 5,
**dadurch gekennzeichnet,**
**dass** der in die Öffnung (3) vorkragende Teil der Dichteinrichtung (6) in einer ersten dichtenden Position und/oder in seiner die Öffnung (3) wenigstens teilweise freigebenden zweiten Position arretierbar ist.

7. Kraftfahrzeug nach einem der Ansprüche 1 bis 6,
**dadurch gekennzeichnet,**
**dass** die Dichteinrichtung (6) mit einem Wasserkanal (8) ausgeführt ist.

8. Kraftfahrzeug nach Anspruch 7,
**dadurch gekennzeichnet,**
**dass** die Dichteinrichtung (6) mit einem an dem dem Dachelement (4A) zugewandten Ende des Wasserkanals (8) angeordneten Dichtelement (9) ausgeführt ist.

9. Kraftfahrzeug nach Anspruch 8,
**dadurch gekennzeichnet,**
**dass** der Wasserkanal und das Dichtprofil einstückig ausgebildet sind.

10. Kraftfahrzeug nach Anspruch 9 oder 10,
**dadurch gekennzeichnet,**
**dass** das Dichtelement einen Mantelbereich (10) aufweist, der mit dem Dachteil (5) eine Öffnung (11) begrenzt, über welche Wasser in den Wasserkanal (8) führbar ist, wobei mittels des Mantelbereichs (10) in dem Wasserkanal (8) befindliches Wasser während der Bewegung der Dichteinrichtung (6) aus dem Bereich der Öffnung (3) in dem Wasserkanal (8) haltbar ist.

11. Kraftfahrzeug nach Anspruch 10,
**dadurch gekennzeichnet,**
**dass** die Öffnung (11) als ein Schlitz ausgebildet ist.

## Claims

1. A motor vehicle (1) comprising at least one roof element (4A, 4B), which is designed to be displaceable relative to a roof component (5) between a first position, equivalent to a closed state of the vehicle roof (2), and a second position, equivalent to an opened state of the vehicle roof (2), and comprising a sealing means (6) which is assigned to the roof component (5) and to the roof element (4A, 4B) and is connected to the roof component (5), which sealing means (6) is in sealing contact, in the closed state of the vehicle roof (2), with the roof element (4A, 4B) on the side of the latter facing the vehicle interior (7) and protrudes, with respect to the roof component (5), at least partially into an opening (3) which is limited by the roof component (5) and can be closed by the roof element (4A, 4B) at least in some areas,
**characterized in that**
at least that part of the sealing means (6) which protrudes into the opening is provided so as to be movable with respect to the roof component (5) such that said part can be guided at least partially out of the region of the opening (3).

2. Motor vehicle according to claim 1,
**characterized in that**
at least that part of the sealing means (6) which protrudes into the opening (3) is designed to be flexible at least in some areas such that the sealing means (6) can be guided out of the region of the opening (3) at least partially during opening or closing of the vehicle roof (2).

3. Motor vehicle according to claim 2,
**characterized in that**
the flexible region (13) of the sealing means (6) has a hinge-like design and that part of the sealing means (6) which protrudes into the opening (3) can be swivelled out of a first, sealing position into a second position which exposes at least part of the opening (3).

4. Motor vehicle according to any one of claims 1 to 3,
**characterized in that**,
when opening and/or closing the vehicle roof (2), that part of the sealing means (6) which protrudes into the opening (3) can be guided out of the region of the opening (3) by the roof element (4A, 4B), which is then passed through the opening (3).

5. Motor vehicle according to any one of claims 1 to 4,
**characterized in that**
the disposition of that part of the sealing means (6) which protrudes into the opening (3) depends on a state of an adjusting mechanism of the roof element (4A, 4B).

6. Motor vehicle according to any one of claims 3 to 5,
**characterized in that**
**that** part of the sealing means (6) which protrudes into the opening (3) can be locked in a first sealing position and/or in its second position which exposes at least part of the opening (3).

7. Motor vehicle according to any one of claims 1 to 6,
**characterized in that**
the sealing means (6) is provided with a water duct (8).

8. Motor vehicle according to claim 7,
**characterized in that**
the sealing means (6) is provided with a sealing element (9) which is arranged at the end of the water duct (8) facing the roof element (4A).

9. Motor vehicle according to claim 8,
**characterized in that**
the water duct and the sealing profile are provided as one piece.

10. Motor vehicle according to claim 9 or 10,
**characterized in that**
the sealing element comprises a mantle region (10) which, together with the roof component (5), limits an opening (11) through which water can be guided into the water duct (8), said mantle region (10) allowing to keep water that is present in the water duct (8) during movement of the sealing means (6) out of the region of the opening (3).

11. Motor vehicle according to claim 10,
**characterized in that**
the opening (11) is provided as a slot.

## Revendications

1. Véhicule automobile (1) comprenant au moins un élément de toit (4A, 4B) réalisé mobile par rapport à une partie de toit (5) entre une première position équivalant à un état fermé du toit (2) du véhicule et une deuxième position équivalant à un état ouvert du toit (2) du véhicule et avec un dispositif d'étanchéité (6) associé à la partie de toit (5) et à l'élément de toit (4A, 4B) et relié à la partie de toit (5) qui, dans l'état fermé du toit (2) du véhicule vient en contact étanche, sur la face de l'élément de toit (4A, 4B) en regard de l'habitacle (7) du véhicule, avec cet élément et fait saillie par rapport à la partie de toit (5) au moins partiellement dans une ouverture (3) délimitée par la partie de toit (5) et obturable au moins partiellement par l'élément de toit (4A, 4B), **caractérisé en ce qu'**au moins la partie du dispositif d'étanchéité (6) en saillie dans l'ouverture est réalisée mobile par rapport à la partie de toit (5), de sorte qu'elle puisse être guidée au moins partiellement hors de la zone de l'ouverture (3).

2. Véhicule automobile selon la revendication 1, **caractérisé en ce qu'**au moins la partie du dispositif d'étanchéité (6) en saillie dans l'ouverture (3) est réalisée au moins partiellement flexible de telle manière que le dispositif d'étanchéité (6) peut être guidé au moins partiellement hors de la zone de l'ouverture (3) durant l'ouverture ou la fermeture du toit (2) du véhicule.

3. Véhicule automobile selon la revendication 2, **caractérisé en ce que** la zone flexible (13) du dispositif d'étanchéité (6) est réalisée articulée et **en ce que** la partie du dispositif d'étanchéité (6) en saillie dans l'ouverture (3) peut être pivotée d'une première position d'étanchéification dans une deuxième position libérant au moins partiellement l'ouverture (3).

4. Véhicule automobile selon l'une quelconque des revendications 1 à 3, **caractérisé en ce que** la partie du dispositif d'étanchéité (6) en saillie dans l'ouverture (3) peut être guidée hors de la zone de l'ouverture (3) lors d'une opération d'ouverture et/ou de fermeture du toit (2) du véhicule par l'élément de toit (4A, 4B) guidé à cette fin à travers l'ouverture (3).

5. Véhicule automobile selon l'une quelconque des revendications 1 à 4, **caractérisé en ce qu'**un ensemble de la partie du dispositif d'étanchéité (6) en saillie dans l'ouverture (3) est dépendant d'un état d'un mécanisme de réglage de l'élément de toit (4A, 4B).

6. Véhicule automobile selon l'une quelconque des revendications 3 à 5, **caractérisé en ce que** la partie du dispositif d'étanchéité (6) en saillie dans l'ouverture (3) peut être bloquée dans une première position d'étanchéification et/ou dans sa deuxième position libérant au moins partiellement l'ouverture (3).

7. Véhicule automobile selon l'une quelconque des revendications 1 à 6, **caractérisé en ce que** le dispositif d'étanchéité (6) comprend une voie d'eau (8).

8. Véhicule automobile selon la revendication 7, **caractérisé en ce que** le dispositif d'étanchéité (6) comprend un élément d'étanchéité (9) disposé à l'extrémité de la voie d'eau en regard de l'élément de toit (4A).

9. Véhicule automobile selon la revendication 8, **caractérisé en ce que** la voie d'eau et le profil d'étanchéité sont conformés d'une seule pièce.

10. Véhicule automobile selon la revendication 9 ou 10, **caractérisé en ce que** l'élément d'étanchéité présente une zone enveloppe (10) qui délimite avec la partie de toit (5) une ouverture (11) par laquelle on peut amener de l'eau dans la voie d'eau (8), et permettant au moyen de la zone enveloppe (10) d'y (8) conserver de l'eau se trouvant dans la voie d'eau (8) lors du mouvement de sortie du dispositif d'étanchéité (6) hors de la zone de l'ouverture (3).

11. Véhicule automobile selon la revendication 10, **caractérisé en ce que** l'ouverture (11) est conformée en fente.
